# DEMANDE DE BREVET EUROPEEN

(11) **EP 0 829 949 A1**
(43) Date de publication de la demande: **18.03.1998**
(21) Numéro de dépôt: 97401995.2
(22) Date de dépôt: 27.08.1997
(51) Int. Cl.: H02M 3/337

(54) **Dispositif d'alimentation stabilisée à découpage hyperrésonant et redressement synchrone**

(30) Priorité: 06.09.1996 FR 9610899
(71) Demandeur: Sinfor, 92200 Neuilly sur Seine (FR)
(72) Inventeur: Sardat, Pierre, 93250 Villemomble (FR)
(74) Mandataire: Fruchard, Guy

(57) **Abrégé**

Le dispositif d'alimentation stabilisée comporte une entrée (1) reliée à un circuit de découpage hyperrésonant (3) associé à un enroulement primaire (7) d'un transformateur de puissance (8) ayant au moins un enroulement secondaire (19) associé à un circuit de redressement comportant des interrupteurs électroniques (20, 21) montés en pont et reliés à un circuit de commande de redressement (18) pour être alternativement fermés lors d'une inversion de courant dans l'enroulement primaire (7) du transformateur de puissance (8) et ouverts lors d'une inversion de tension à une entrée du circuit de découpage (3), une régulation étant en outre assurée sur l'un des circuits de sortie par une boucle de régulation (31) reliée à un organe de commande (10) du circuit de découpage.

## Description

La présente invention concerne un dispositif d'alimentation stabilisée.

On connaît des dispositifs d'alimentation stabilisée comportant une entrée reliée à un circuit de découpage hyperrésonant associé à un enroulement primaire d'un transformateur de puissance ayant au moins un enroulement secondaire associé à un circuit de redressement dont la sortie est reliée par une boucle de régulation à un organe de commande du circuit de découpage.

Dans les dispositifs connus le circuit de redressement est un circuit asynchrone c'est-à-dire un circuit comportant des organes de redressement, généralement des diodes, fonctionnant de façon automatique pour réaliser une commutation lors de chaque alternance dans le signal transmis au secondaire du transformateur de puissance afin de délivrer un signal redressé à la sortie du dispositif d'alimentation. Dans ces dispositifs, la commutation des organes de redressement s'effectue avec une dissipation d'énergie importante et le rendement des dispositifs d'alimentation de ce type n'est pas très satisfaisant. En outre, la dissipation d'énergie risque d'entraîner un échauffement anormal des composants et pour assurer un refroidissement il est donc nécessaire de prévoir des dispositions qui augmentent de façon sensible l'encombrement et le poids du dispositif d'alimentation.

Par ailleurs lorsque le dispositif d'alimentation comporte plusieurs sorties, chacune associée à un enroulement secondaire du transformateur de puissance, une seule des sorties peut être reliée par une boucle de régulation à l'organe de commande du circuit de découpage, les autres sorties faisant l'objet d'une régulation croisée, c'est-à-dire d'une régulation qui découle automatiquement de la régulation sur la sortie comportant la boucle de régulation. Toutefois, dans le cas d'un redressement asynchrone, les organes de redressement des différentes sorties ont des impédances qui varient en fonction du courant traversant ces organes de redressement de sorte que la régulation croisée est assurée avec une précision qui varie selon les sorties. Si l'on souhaite obtenir une même précision de régulation sur les différentes sorties, il est alors nécessaire de prévoir des régulations indépendantes sur chacune des sorties, ce qui entraîne une augmentation du coût et du poids du dispositif d'alimentation stabilisée et une perte de rendement de ce dispositif.

Selon l'invention on propose un dispositif d'alimentation stabilisée comportant une entrée reliée à un circuit de découpage hyperrésonant associé à un enroulement primaire d'un transformateur de puissance ayant au moins un enroulement secondaire associé à un circuit de redressement ayant une sortie reliée par une boucle de régulation à un organe de commande du circuit de découpage, dans lequel le circuit de redressement comporte des interrupteurs électroniques montés en pont et reliés à un circuit de commande de redressement pour être alternativement fermés lors d'une inversion de courant dans l'enroulement primaire du transformateur de puissance et ouverts lors d'une inversion de tension à une entrée du circuit de découpage.

Ainsi, en raison de la commande précise des interrupteurs électroniques par le circuit de commande de redressement, les états transitoires sont de faible durée de sorte que le rendement du dispositif d'alimentation se trouve très fortement amélioré. En outre le décalage entre l'ouverture et la fermeture des interrupteurs garantit que deux interrupteurs d'un même pont ne sont pas simultanément fermés.

Par ailleurs, les interrupteurs électroniques ont en position fermée une impédance très faible qui ne varie pas de façon sensible en fonction du courant les traversant de sorte que dans le cas d'une alimentation comportant plusieurs sorties, les différentes sorties réagissent de façon identique et la régulation d'une seule des sorties par une boucle de régulation permet d'obtenir une précision de régulation sensiblement identique sur les autres sorties.

Selon une version avantageuse de l'invention, l'inversion du courant dans l'enroulement primaire du transformateur de puissance est détectée par une variation de tension aux bornes de l'enroulement secondaire du transformateur de puissance.

Selon un mode de réalisation préféré de l'invention, le circuit de commande de redressement comporte un organe d'isolation galvanique ayant un primaire relié à l'entrée du circuit de découpage et un secondaire ayant des bornes reliées à des diodes montées en opposition, chaque diode étant reliée d'une part à une borne de l'enroulement secondaire du transformateur de puissance par l'intermédiaire de résistances disposées selon un montage diviseur, et d'autre part à un détecteur de seuil ayant une entrée reliée à un point intermédiaire du montage diviseur et une sortie reliée à une commande d'un interrupteur électronique du circuit de redressement. De préférence, le circuit de commande de redressement comporte des capacités montées en parallèle aux résistances constituant le montage diviseur.

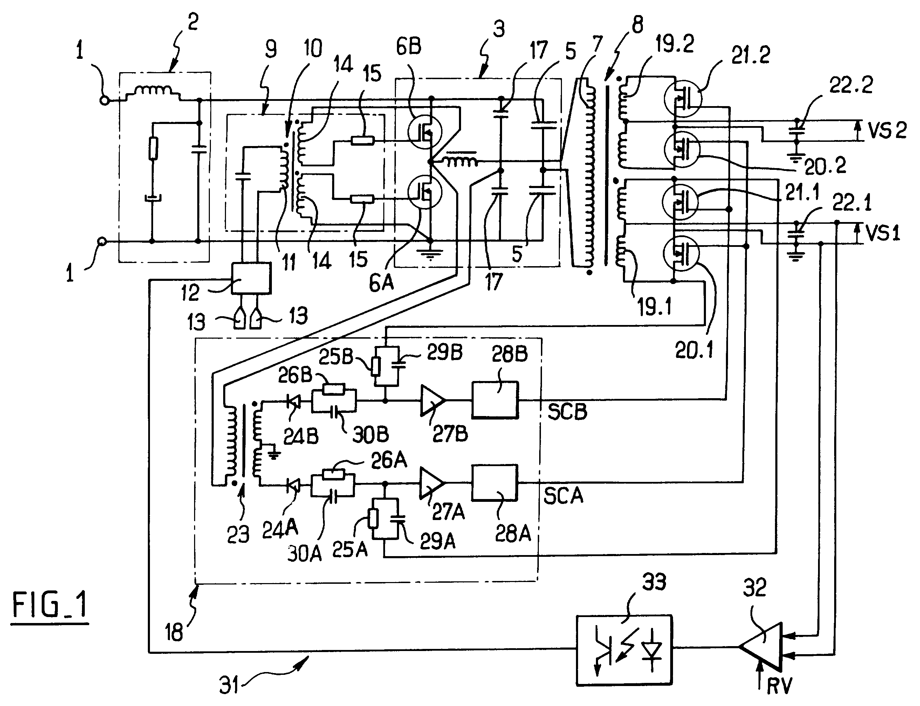

D'autres caractéristiques et avantages de l'invention apparaîtront à la lecture de la description qui va suivre d'un mode de réalisation particulier non limitatif de l'invention, en relation avec la figure unique ci-jointe qui est une représentation schématique d'un mode de réalisation du dispositif d'alimentation stabilisée selon l'invention.

En référence à la figure, le dispositif d'alimentation stabilisée selon l'invention comporte une entrée comprenant des bornes 1 destinées à être reliées à une source d'alimentation en courant continu non stabilisée telle qu'un pont de diode. L'entrée 1 est reliée par l'intermédiaire d'un filtre d'entrée généralement désigné en 2 à un circuit de découpage hyperrésonant généralement désigné en 3. Le filtre 2 est de structure conventionnelle et ne sera pas décrit en détail. Le circuit de découpage 3 comporte une inductance 4 couplée à des condensateurs 5 et deux interrupteurs électroniques 6, ici des transistors MOSFET, selon un montage en demi-pont. Les deux transistors 6 sont identifiés de façon plus particulière sur la figure par les références 6A et 6B. La sortie du circuit de découpage est associée à l'enroulement primaire 7 d'un transformateur de puissance généralement désigné en 8. L'enroulement primaire 7 du transformateur de puissance a l'une de ses bornes reliée à l'inductance 4 tandis que l'autre borne est reliée à un point intermédiaire entre les condensateurs 5.

Les interrupteurs électroniques 6 du circuit de découpage 3 sont commandés par un circuit de commande de découpage généralement désigné en 9. Le circuit de commande de découpage comporte un transformateur de commande 10 dont l'enroulement primaire 11 est relié par l'intermédiaire d'un organe de régulation 12, dont l'utilité sera vue plus loin, à des bornes 13 d'alimentation d'un signal de commande de découpage en créneaux. Le transformateur 10 comporte en outre deux enroulement secondaires 14 bobinés dans le même sens et dont les extrémités adjacentes sont respectivement reliées à la grille des transistors MOSFET 6 par l'intermédiaire d'une résistance 15 tandis que les extrémités opposées des enroulements 14 sont respectivement reliées l'une à la masse et l'autre en un point intermédiaire 16 d'une ligne reliant le drain de l'un des transistors MOSFET, dont la source est reliée à la masse, à la source de l'autre transistor MOSFET dont le drain est relié à la sortie du filtre d'entrée 2. L'inductance 4 est également reliée au point intermédiaire 16 pour former le circuit en demi-pont.

Le circuit de découpage comprend également un pont capacitif formé de deux condensateurs 5. Le circuit de découpage comporte également deux condensateurs 17 servant à prélever une tension entre le point 16 intermédiaire aux interrupteurs électroniques 6 d'une part et un point intermédiaire entre les condensateurs 17 d'autre part. La tension ainsi prélevée est une tension alternative qui est représentative de l'inversion de tension à l'entrée du circuit de découpage. Cette tension est fournie à l'entrée d'un circuit de commande de redressement généralement désigné en 18 dont la structure détaillée sera vue ci-après.

Dans le mode de réalisation illustré le transformateur de puissance 8 comporte deux enroulements secondaires, portant la référence numérique générale 19 et les références particulières 19.1 et 19.2, respectivement destinés à alimenter deux sorties VS1 et VS2 du dispositif d'alimentation stabilisée selon l'invention. Chacun des enroulements secondaires 19 est associé à un circuit de redressement. Chaque circuit de redressement comporte deux interrupteurs électroniques, ici des transistors MOSFET, respectivement désignés par la référence générale 20 et 21 et par les références particulières, respectivement 20.1 et 21.1 pour la sortie VS1, et 20.2 et 21.2 pour la sortie VS2. Dans chaque circuit de redressement, les sources des transistors 20 et 21 sont reliées entre elles tandis que les drains sont reliés à des extrémités opposées de l'enroulement secondaire correspondant et les grilles sont reliées à une sortie de commande du dispositif de commande de redressement 18, respectivement la sortie de commande SCA pour les transistors 20.1 et 20.2 et la sortie de commande SCB pour les transistors 21.1 et 21.2. La tension de sortie de chacune des sorties est prélevée selon un montage en pont entre le point milieu de l'enroulement secondaire 19 correspondant et un point intermédiaire entre les sources des transistors 20 et 21 correspondant, ce point étant par ailleurs mis à la masse. Un condensateur de filtrage 22, respectivement 22.1 et 22.2 est disposé entre les lignes de sortie de chacun des circuits de redressement.

Le circuit de commande de redressement 18 comporte un organe d'isolation galvanique, ici un transformateur 23, ayant un enroulement primaire relié au circuit de découpage 3 et un enroulement secondaire ayant des bornes reliés aux bornes de sortie de diodes 24, respectivement 24Aet 24B montées en opposition, chaque diode 24 ayant une entrée reliée d'une part à une borne de l'enroulement secondaire 19.1 du transformateur de puissance par l'intermédiaire de résistances 25 et 26, respectivement 25A et 26A, et 25B, 26B disposées selon un montage diviseur, et d'autre part à un détecteur de seuil 27, respectivement 27A et 27B, dont l'entrée est reliée à un point intermédiaire du montage diviseur et la sortie est reliée à la sortie correspondante du dispositif de commande de redressement 18 par l'intermédiaire d'un amplificateur de courant 28, respectivement 28A et 28B. Des capacités 29 et 30, respectivement 29A et 30A, et 29B et 30B sont montées en parallèle aux résistances 25 et 26 constituant le montage diviseur.

Par ailleurs, le dispositif d'alimentation comporte une boucle de régulation généralement désignée en 31. Cette boucle de régulation comprend des lignes de prélèvement de la tension à la sortie VS1 reliées à un comparateur 32 comprenant une borne d'entrée d'une tension de référence RV, la sortie du comparateur 32 étant reliée à un organe de découplage galvanique, ici un optocoupleur 33, relié à l'organe de régulation 12 qui fournit la tension de commande au transformateur de commande 10 du circuit de découpage.

On va maintenant décrire le fonctionnement du dispositif selon l'invention en partant de la situation où le transistor 6A vient d'être bloqué par un signal de commande du transformateur de commande 10 tandis que le transistor 6B est mis en conduction après un temps mort, les transistors 20.1 et 20.2 étant en conduction et formant ainsi des interrupteurs électroniques fermés tandis que les transistors 21.1 et 21.2 sont bloqués et forment des interrupteurs électroniques ouverts.

La tension montante apparaissant aux bornes du transistor 6B est immédiatement transmise au transformateur 23 du circuit de commande de redressement et provoque un blocage de la diode 24B et une mise en conduction de la diode 24A. Cette mise en conduction de la diode 24A provoque une mise à zéro de la sortie SCA du dispositif de commande de redressement de sorte que les transistors 20.1 et 20.2 se bloquent tandis que les transistors 21.1 et 21.2 restent bloqués. Cette mise à zéro de la sortie SCA est accélérée par la disposition des condensateurs 29A et 30A.

Avec un léger retard propre au système hyperrésonant, le courant s'inverse dans le circuit de découpage 3 et en particulier dans le primaire 7 du transformateur de puissance 8. Un front montant apparaît alors sur la borne de l'enroulement secondaire 19.1 qui est reliée à la résistance 25B. La tension au point intermédiaire entre les résistances 25B et 26B est fonction de la tension aux bornes de l'enroulement secondaire 19.1 et du rapport de valeur de ces résistances. Lorsque la tension au point intermédiaire atteint un seuil déterminé par le détecteur de seuil 27B, un signal apparaît à la sortie SCB du dispositif de commande de redressement 18. Les transistors 21.1 et 21.2 sont alors mis en conduction tandis que les transistors 20.1 et 20.2 restent bloqués.

Ensuite, lorsque le transistor 6B est bloqué tandis que transistor 6A est mis en conduction, il se produit une inversion de la tension au primaire du transformateur 23 du circuit de commande 18. Cette inversion de tension provoque une mise en conduction de la diode 24B et un blocage simultané de la diode 24A de sorte que la borne de sortie SCB du dispositif de commande de redressement 18 est mise à zéro et provoque un nouveau blocage des transistors 21 tandis que les transistors 20 sont toujours bloqués. C'est seulement lors de l'inversion du sens du courant dans le circuit de découpage avec un retard par rapport à la mise en conduction du transistor 6A qu'un seuil de tension est détecté par le détecteur de seuil 27A qui alimente alors la sortie SCA, provoquant ainsi la mise en conduction des transistors 20.

On constate ainsi que les transistors 20 et 21 sont alternativement mis en conduction sans risque d'une mise en conduction simultanée de ces transistors. On obtient donc un redressement sans perturbation de la tension alternative délivrée dans les enroulements secondaires du transformateur de puissance 8.

Pendant les instants où les transistors 6, 20 et 21 sont bloqués, le courant résiduel peut s'écouler par les diodes parasites non représentées de ces transistors.

On remarquera que lorsqu'ils sont en conduction, les transistors 20 et 21 ont une impédance très faible de sorte que les différents circuits de sortie ont des réactions similaires, la tension de chaque circuit de sortie étant déterminée par le dimensionnement de l'enroulement secondaire 19 correspondant du transformateur de puissance. En conséquence, il suffit d'assurer une régulation sur l'un seulement des circuits de sortie pour obtenir le même degré de précision sur l'ensemble des circuits de sortie. A cet effet, le comparateur 32 de la boucle de régulation fournit à l'organe de régulation 12 un signal d'erreur en tension qui est ensuite converti en fréquence et mis en forme avant d'être transmis au primaire du transformateur de commande 10 du circuit de découpage à résonance.

Bien entendu l'invention n'est pas limitée au mode de réalisation décrit et on peut y apporter des variantes de réalisation sans sortir du cadre de l'invention tel que défini par les revendications.

En particulier, bien que le dispositif selon l'invention ait été décrit en relation avec un circuit de découpage avec un demi-pont, on pourra également réaliser le dispositif selon l'invention avec un circuit de découpage en pont complet sans changement du dispositif de commande de redressement.

Par ailleurs, bien que l'invention ait été illustrée avec des interrupteurs électroniques sous forme de transistors MOSFET, on pourra également utiliser d'autres interrupteurs électroniques le cas échéant en adaptant de façon correspondante le dispositif de commande de redressement.

## Revendications

1. Dispositif d'alimentation stabilisée comportant une entrée (1) reliée à un circuit de découpage hyperrésonant (3) associé à un enroulement primaire (7) d'un transformateur de puissance (8) ayant au moins un enroulement secondaire (19) associé à un circuit de redressement ayant une sortie reliée par une boucle de régulation (31) à un organe de commande (10) du circuit de découpage, caractérisé en ce que le circuit de redressement comporte des interrupteurs électroniques (20, 21) montés en pont et reliés à un circuit de commande de redressement (18) pour être alternativement fermés lors d'une inversion de courant dans l'enroulement primaire (7) du transformateur de puissance (8) et ouverts lors d'une inversion de tension à une entrée du circuit de découpage (3).

2. Dispositif d'alimentation selon la revendication 1, caractérisé en ce que l'inversion de courant dans l'enroulement primaire (7) du transformateur de puissance (8) est détectée par une variation de tension aux bornes de l'enroulement secondaire (19.1) du transformateur de puissance.

3. Dispositif d'alimentation selon la revendication 2, caractérisé en ce que le circuit de commande de redressement (18) comporte un organe d'isolation galvanique (23) ayant un primaire relié au circuit de découpage (3) et un secondaire ayant des bornes reliées à des bornes de sortie de diodes (24) montées en opposition, chaque diode ayant une borne d'entrée reliée d'une part à une borne de l'enroulement secondaire du transformateur de puissance par l'intermédiaire de résistances (25, 26) disposées selon un montage diviseur, et d'autre part à un détecteur de seuil (27) ayant une entrée reliée en un point intermédiaire du montage diviseur et une sortie reliée à une commande d'un interrupteur électronique du circuit de redressement.

4. Dispositif d'alimentation selon la revendication 3, caractérisé en ce que le circuit de commande de redressement (18) comporte des capacités (29, 30) montées en parallèle aux résistances (25, 26) constituant le montage diviseur.
